# EUROPEAN PATENT SPECIFICATION

(11) **EP 3 515 249 B1**
(45) Date of publication and mention of the grant of the patent: **08.07.2020**
(21) Application number: 17772124.8
(22) Date of filing: 15.09.2017
(51) Int. Cl.: A47B 9/20, B21C 37/15, B21C 37/08

(54) **MANUFACTURING METHODS OF ELONGATED TUBES, ELONGATED TUBES AND TELESCOPIC COLUMNS OF HEIGHT-ADJUSTABLE FURNITURE**
HERSTELLUNGSVERFAHREN VON LÄNGLICHEN ROHREN, LÄNGLICHE ROHRE UND TELESKOPISCHE STÜTZEN VON HÖHENVERSTELLBAREN MÖBELN
PROCÉDÉS DE FABRICATION DE TUBES ALLONGÉS, TUBES ALLONGÉS ET COLONNES TÉLESCOPIQUES DE MEUBLES RÉGLABLES EN HAUTEUR

(30) Priority: 26.09.2016 SE 1651263
(43) Date of publication of application: 31.07.2019
(73) Proprietor: Kinnarps AB, 521 88 Kinnarp (SE)
(72) Inventor: HÖGLUND, Per, 554 59 Jönköping (SE)
(74) Representative: Bergenstråhle Group AB
(86) International application number: PCT/SE2017/050908
(87) International publication number: WO 2018/056886

(56) References cited:
- WO-A1-96/27456
- DE-A1- 19 818 004
- JP-A- H08 103 818
- JP-A- H08 281 360

## Description

### Technical field

The present invention relates generally to methods for manufacturing elongated tubes of telescopic columns for height-adjustable furniture, elongated tubes of telescopic columns and telescopic columns for height adjustable furniture.

### Background art

Height-adjustable furniture may be for example tables in which the height of the table top can be raised or lowered. The table has legs in the shape of telescopic columns, each leg has two or more elongated tubes that are arranged so that they are concentric with each other. The table top is arranged onto one end of the legs. In connection with the legs, an arrangement for changing the height of the table top is arranged, which arrangement drives the concentric elongated tubes in the elongate direction, out of or into each other. This arrangement may be a linear actuator arranged inside the tubes and connected to the tubes, the actuator may be driven by an electric motor. The concentric elongated tubes can be driven in a first direction out of each other, to lengthen the legs thereby increasing the height of the table, or in an opposite direction so that they are driven into each other to shorten the legs thereby decreasing the height of the table.

To fulfill customer requests, some legs, and consequently some elongated tubes, have a circular cross-section. For elongated tubes having a circular cross-section, compared to e.g. legs with a squared cross-section, there is a risk that a first elongated tube of a leg is rotated in relation to a second elongated tube of the leg. Such rotation may result in for example that feet connected to the lower end of the legs are twisted. Such twisting may in its turn result in an unstable table that may fall onto a user.

Consequently, there is a need of an arrangement for preventing rotation between concentric tubes of a telescopic column. Also, consumers want furniture legs with smooth outer surfaces. In other words, the rotation preventing arrangement should be invisible from the outside, if possible. Also, the tubes should preferably have thin dimensions. The applicant today provides such an arrangement by welding a substantially flat elongated part onto the inner side of the first, outer, elongated tube in the elongate direction, and by attaching sliding blocks onto the outer side of the second, inner, elongated tube in the same elongate direction. When the first and the second tube are moved into and out of each other, the flat elongated part of the first elongated tube moves between the sliding blocks of the second elongated tubes. Thereby, the first tube is guided to go straight into the second tube, between the sliding blocks, preventing a mutual rotation movement. Also, such an arrangement is invisible from the outside.

Even though such an arrangement is well-functioning for providing a non-rotational movement between inner and outer elongated tubes of a leg of a height-adjustable furniture, the arrangement has proven to be rather expensive to produce. Consequently, there is a need for achieving a more cost-efficient solution for manufacturing concentric elongated tubes of a leg of a height-adjustable furniture in which any twisting of the concentric elongated tubes of a leg is avoided when the concentric elongated tubes are moved into and out of each other.

International patent application WO 96/27456 describes a method for manufacturing hardened stainless steel tubing, pipes and assemblies. International patent application WO 2009/027885 describes an assembling arrangement for securing a tubular furniture leg to the top plate of a furniture.

### Summary of invention

It is an object of the invention to address at least some of the problems and issues outlined above. It is an object of embodiments of the invention to be able to provide cost-efficient tubes of a telescopic column for height-adjustable furniture that have an arrangement preventing mutual rotation of the concentric tubes. It is possible to achieve one or more of these objects and possibly others by using a manufacturing method, a first elongated tube and a telescopic column as defined in the attached independent claims.

According to a first aspect, a method is provided for manufacturing a first elongated tube of a telescopic column for a height-adjustable furniture, wherein the first elongated tube is to have a length along a longitudinal center axis, to have a circular cross-section perpendicular to the center axis with a circumference, to co-operate with a second elongated tube of a smaller circular cross-section than the first elongated tube, and to have a first elongate protrusion arranged on an inner side of the first elongated tube. The protrusion extends along the center axis for co-operation with one or more second protrusions arranged on an outer side of the second elongated tube so as to prevent rotation between the first elongated tube and the second elongated tube when the first elongated tube and the second elongated tube are mounted together in a telescopic column. The method comprises obtaining a square-shaped flat material sheet having a length along a longitudinal axis corresponding to the length of the manufactured first elongated tube, and a width perpendicular to the longitudinal axis from a first edge to an opposite second edge that is greater than the circumference of the manufactured first elongated tube. The method further comprises folding the flat material sheet at a longitudinal demarcation line arranged between a first part having a length corresponding to the length of the flat material sheet and a width corresponding to the circumference of the manufactured first elongated tube, and an end part having a length corresponding to the length of the flat material sheet and a width corresponding to a width of the first elongate protrusion of the manufactured first elongated tube. The flat material sheet is folded so that the end part is folded towards a first side of the flat material sheet that is to become the inner side of the first elongated tube such that a fold is created. The method further comprises bending the first part of the flat material sheet along the longitudinal axis into a tube-shaped form such that the first side becomes the inner side of the first elongated tube, and such that the end part forms the first elongate protrusion, and bonding a joint at the fold of the tube-shaped form together such that the cross-section of the first elongated tube is seamless. Hereby, a cost-efficient and time-efficient method for manufacturing a first elongated tube of a telescopic column is achieved, which manufactured first tube achieves a good rotation-protection when co-operating with a second elongated tube of the telescopic column having a smaller cross-sectional dimension than the first tube. By hereby manufacturing the first tube with its rotation-protection protrusion out of one and the same material sheet, no cumbersome welding of a rotation-protection protrusion onto the inside of the first tube has to be performed. Also, it is easier to get the rotation-protection protrusion correctly positioned on the inner side of the tube by this manufacturing method than by the one that is used today.

Further, the end part comprises two end parts mutually separated by the first part, and the demarcation line comprises a first demarcation line arranged between a first of the two end parts and the first part, and a second demarcation line arranged between a second of the two end parts and the first part. Further, the folding comprises folding the flat material sheet at the first demarcation line creating a first fold and folding the flat material sheet at the second demarcation line creating a second fold. Further, the bending is performed such that the first fold and the second fold meet at their demarcation lines, and the bonding of a joint is performed where the first and the second fold meet. By creating two folds and boding the joint where the folds meet there are more material present at the joint than is the case when there is no fold or only one fold at the joint. Consequently, a better bond could be achieve with no or at least lower additional welding material compared to the case when there is no fold or only one fold at the welding position.

According to another embodiment, the end part is only one continuous end part and the demarcation line is only one demarcation line separating the one continuous end part from the first part. Further, the folding comprises folding the flat material sheet at the one demarcation line creating only one fold, and the bending is performed such that the one fold meets the first edge at its demarcation line. Further, the bonding of a joint is performed where the first edge and the one fold meet. Such a method requires less bending than the method in the embodiment in the former paragraph and the method may therefore be easier to perform. Also, there are still some extra material at the joint for the welding.

According to another embodiment, the flat material sheet is folded at the demarcation line such that a first side of the end part bears against a first side of the first part. Such a method caters for that the first elongated protrusion can become low, i.e. have a short extension in the radial direction of the tube. Hereby, the first and second tubes of the telescopic column can be arranged rather close to each other which is of interest for achieving a controlled telescopic movement between the first and second tubes.

According to an embodiment, the folding and bending are performed in a roll-forming procedure. Such a procedure is quick and normally produces good quality results.

According to another embodiment, the method further comprises flattening out the flat material sheet at the end part. Hereby, a first rotation-protection protrusion may be achieved that has a lower thickness than the thickness of the first tube, i.e. which extends only a short way in the radial direction. Hereby, the outer and inner tubes may be positioned quite close to each other when in a telescopic column.

According to a second aspect, a first elongated tube of circular cross-section is provided, for co-operation with a second elongated tube of circular cross-section in a telescopic column of a height adjustable furniture. The first elongated tube extends along a longitudinal center axis and has a larger cross-sectional dimension than the second elongated tube. The first elongated tube comprises a first elongate protrusion arranged on an inner side of the first elongated tube and extending along the center axis, for co-operation with one or more second protrusions arranged on an outer side of the second elongated tube so as to prevent rotation between the first elongated tube and the second elongated tube when the first elongated tube and the second elongated tube are mounted together in a telescopic column. Further, the first elongated tube including the first elongated protrusion is produced in one piece according to the method of the first aspect. Hereby a quick production of the tube can be achieved. Further, the first elongate protrusion is securely fastened to the tube.

According to an embodiment, the first elongated protrusion constitutes a longitudinal end part of a material sheet from which the first elongated tube is produced.

According to another embodiment the first elongated protrusion is built up from opposite longitudinal end parts of the material sheet. The opposite longitudinal end parts have been folded so that they bear against a first part of the material sheet and thereafter the opposite end parts have been bonded together.

According to another embodiment, the first elongated protrusion bears against the inner side of the first elongated tube.

According to another embodiment, the first elongated tube is produced according to any of the methods and embodiments described in connection with the first aspect.

According to a third aspect, a telescopic column for a height-adjustable furniture is provided. The telescopic column extends along a center axis. The telescopic column comprises a first elongated tube of a circular cross-section, and a second elongated tube of a circular cross-section, the second elongated tube having a smaller cross-sectional dimension than the first elongated tube and the second elongated tube being substantially concentric with the first elongated tube. Further, the second elongated tube is arranged to move into and out of the first elongated tube so as to adjust the length of the telescopic column. Further, the telescopic column comprises a rotation prevention arrangement for preventing rotation between the first elongated tube and the second elongated tube. The rotation prevention arrangement comprises a first elongate protrusion arranged on an inner side of the first elongated tube and extending along the center axis, and one or more second protrusions arranged on an outer side of the second elongated tube and extending along the center axis. The first elongate protrusion and the one or more second protrusions are arranged to co-operate when the second elongated tube is moved into and out of the first elongated tube so as to prevent rotation between the first elongated tube and the second elongated tube. Further, the first elongated tube including the first elongated protrusion is produced in one piece according to the method of the first aspect.

Further possible features and benefits of this solution will become apparent from the detailed description below.

### Brief description of drawings

The invention is now described, by way of example, with reference to the accompanying drawings, in which:
Fig. 1 is an exploded, perspective view of a telescopic column according to the invention.
Fig. 2 is a close-up view of a part of fig. 1.
Fig. 3a is a view from the above of a flat metal sheet used for manufacturing an outer elongated tube according to an embodiment of the invention. Fig. 3b is a perspective view of the flat metal sheet of fig. 3a after is has been bent into the shape of an outer elongated tube according to an embodiment.
Fig. 4a is a cross-sectional view of an outer elongated tube according to an embodiment. Fig. 4b is a close-up view of a part of fig. 4a.
Fig. 5a is a cross-sectional view of an outer elongated tube according to another embodiment. Fig. 5b is a close-up view of a part of fig. 5a.
Fig. 6a is a cross-sectional view of an outer elongated tube according to another embodiment. Fig. 6b is a close-up view of a part of fig. 6a.
Fig. 7 is a view from the above of a flat metal sheet used for manufacturing an outer elongated tube not according to the invention.
Fig. 8a is a cross-sectional view of an outer elongated tube not according to the invention. Fig. 8b is a close-up view of a part of fig. 8a.
Fig. 9a is a cross-sectional view of an outer elongated tube not according to the invention. Fig. 9b is a close-up view of a part of fig. 9a.
Fig. 10 is a flow chart describing a method for manufacturing an outer elongated tube according to an embodiment.

### Description of embodiments

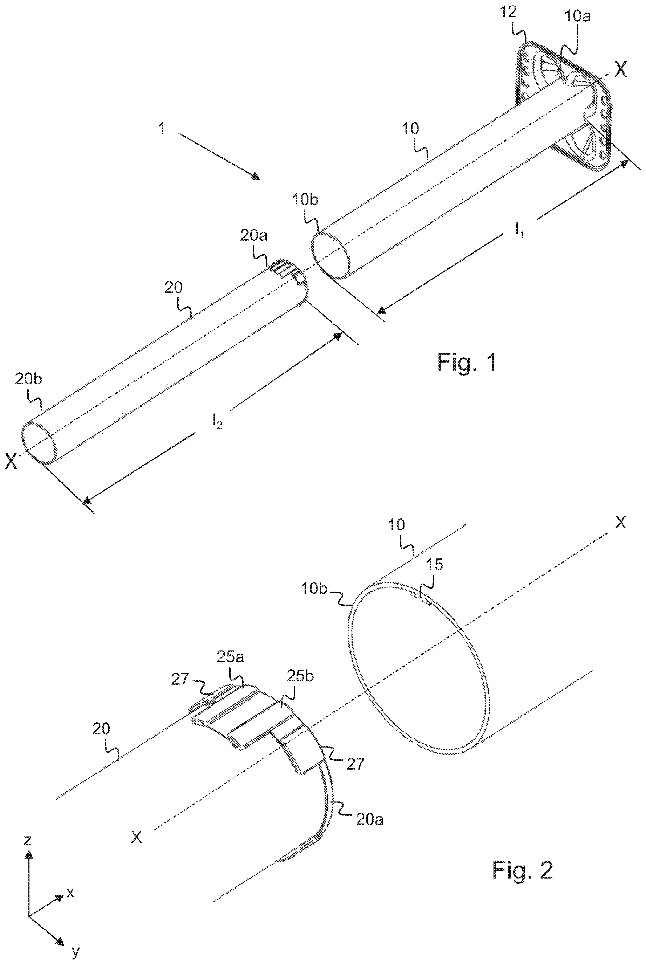

Fig. 1 shows an embodiment of a telescopic column 1 of a height-adjustable furniture, the telescopic column having an elongate extension along a center axis X-X. The telescopic column 1 has a first, outer elongated tube 10, and a second, inner elongated tube 20, the tubes extending along the axis X-X. Each of the tubes 10, 20 has a circular cross-section in a direction perpendicular to the axis X-X. The second tube 20 has a smaller circular cross-section than the first tube 10. The tubes are arranged at least substantially concentric to each other so that they can move into each other to shorten the length of the telescopic column and out of each other to lengthen the length of the telescopic column. Even though the telescopic column of fig. 1 has two concentric tubes, it might as well have three or more than three concentric tubes. According to an embodiment, the tubes are made of metal, e.g. aluminum.

Inside the telescopic column 1, a linear actuator may be positioned, comprising an elongated screw (not shown) having an extension along the longitudinal axis X-X. The elongated screw is rotated, for example by an electric motor, in order to shorten or lengthen the telescopic column. The elongated screw runs through and co-operates with a nut (not shown) firmly secured in the second elongated tube 20 so that when the elongated screw is rotated, the nut moves upwards or downwards on the elongated screw. The first tube 10 is in its turn firmly connected to the adjustable furniture, for example to the table top, via a plate 12 at its first end 10a, the plate being secured to the table top. As the nut is firmly secured to the second tube 20, the movement of the nut upwards or downwards on the elongated screw as the screw is rotated, results in that the second tube 20 is moved out of or into the first tube 10. The second tube 20 is arranged to move in a direction into or out of a second end 10b of the first tube 10, opposite the first end 10a. The second tube 20 has a first end 20a that is to be situated inside the first tube 10 when the telescopic column is used. The second tube 20 further has a second end 20b opposite the first end 20a. Onto the second end 20b a foot (not shown) may be arranged to be positioned on a floor when the height-adjustable furniture is in use. The first tube 10 has an elongate length l₁. The second tube 20 has an elongate length l₂. In an alternative embodiment, the inner elongated tube may be the upper tube, and the outer elongated tube may be the lower tube, i.e. the tube on which the foot may be arranged.

Fig. 2 is a close-up view of fig. 1, showing a region of the first and the second tube 10, 20 including the second end 10b of the first tube 10 and the first end 20a of the second tube 20. Arranged on the inner side of the first tube 10 there is a first elongate rotation-preventing protrusion 15 extending along the center axis X-X, preferably from the second end 10b towards the first end 10a. Further, arranged on the outer side of the second tube 20 at its first end 20a, there is a pair of second rotation-preventing protrusions 25a, 25b arranged spaced apart with a distance corresponding to a width of the first elongate rotation-preventing protrusion 15. The first elongate rotation-preventing protrusion 15 is to co-operate with the pair of second rotation-preventing protrusions 25a, 25b so as to prevent rotation between the first elongated tube 10 and the second elongated tube 20 when the first elongated tube and the second elongated tube are mounted together. So as to prevent rotation, the first elongate rotation-preventing protrusion 15 has the same circumferential y-z position at every x-position along the center axis X-X, seen in a three-dimensional orthogonal x,y,z-diagram where the x-axis is along the center axis X-X. The pair of second rotation preventing protrusions 25a, 25b on the outer side of the second tube 20 may have an extension along the center axis X-X that is of any length, from as short as a couple of percentage of the whole length l₂ of the second tube to up to 100 % of l₂. According to an alternative embodiment, the pair of second rotation preventing protrusion 25a, 25b may comprise two or more pairs spaced apart in a direction along the X-X axis.

In addition, the second inner tube 20 has one or more sliding parts 27 arranged on its outer side onto which the first elongated tube 10 is to slide when the second tube 20 is moved into and out of the first tube. The sliding parts 27 may be positioned in recesses (not shown) of the second tube 20 so as to maintain their positions during the mutual longitudinal movement of the first and second tubes.

According to the invention, the first elongated tube 10 and its first elongate rotation-preventing protrusion 15 are produced in one piece. Preferably, the first tube 10 and its rotation-preventing protrusion are produced from one and the same material sheet, wherein the first elongated rotation-preventing protrusion 15 constitutes an end part of the material sheet. Hereby, the first outer elongated tube 10 of a telescopic column 1 can be produced faster, and thereby more cost-efficient than what is possible today when the first elongated protrusion is attached to the first elongated tube in a separate process. Preferably, the material sheet is a metal sheet, such as aluminum. The first elongated tube 10 including its rotation-preventing protrusion 15 may be produced in a roll-forming process.

Preferably, the first elongated tube and the second elongated tube should have thin dimensions in order to save material and thereby costs. Also, in order to save material but also to get a good guiding for the movement of the second tube 20 into and out of the first tube 10, the radial distance between the first and second tube should be short. In order to be able to have a short radial distance between the first and second tube, the rotation-preventing protrusions 15, 25a, 25b of the first and second tube, respectively, should have a short extension in the radial direction of the tubes. For achieving a short radial extension, the rotation-preventing protrusion 15 of the first tube 10 is flattened out during production so that it has a shorter radial extension than the actual first tube 10.

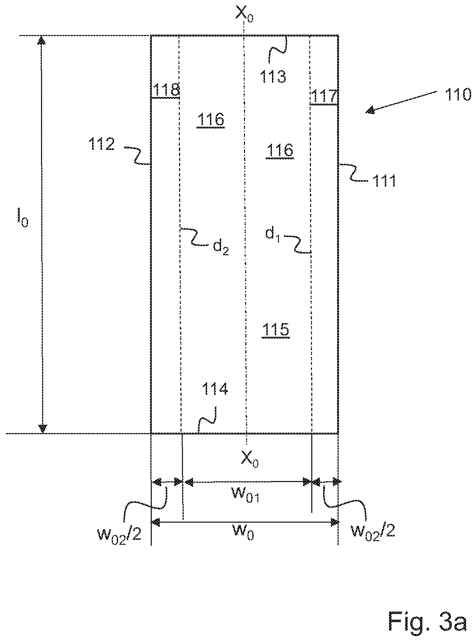

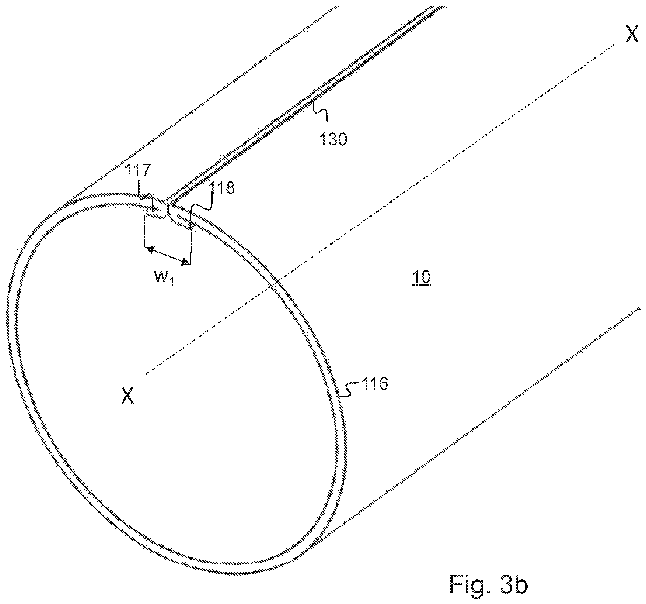

Figure 3a shows a substantially flat, square-shaped sheet 110 preferably of metal, out of which a first elongated tube 10 is manufactured. The flat sheet 110 has a width w₀ from a first end 111 to an opposite second end 112 and a length l₀ from a third end 113 to an opposite fourth end 114. The length l₀ corresponds to the length l₁ of the first elongated tube 10. The dashed-dotted line X₀-X₀ is the longitudinal center line of the flat sheet 110. On the flat metal sheet there are a first and a second demarcation line d₁, d₂, which may be marked onto the sheet 110 or may be imaginary lines, extending in parallel with the longitudinal center line X₀-X₀ from the third end 113 to the fourth end 114. The first demarcation line d₁ delimits a first longitudinal end part 117, extending from the first end 111, from a first part 116, aka longitudinal middle part. The second demarcation line d₂ delimits a second longitudinal end part 118, extending from the second end 112, from the first part 116. In other words, the first part 116 is arranged between the first and the second end part 117, 118. The first part 116 has a width w₀₁ perpendicular to the longitudinal center line X₀-X₀, which is approximately the same as a cross-sectional circumference c of the manufactured first elongated tube 10. The first and second end parts 117, 118 have together a width w₀₂ perpendicular to the longitudinal center line X₀-X₀, which is approximately the same as a width w₁ (see fig. 3b) of the rotation-preventing protrusion 15 of the manufactured first elongated tube 10. According to an embodiment, the first and second end parts have the same width, i.e. both have a width of w₀₂/2.

When the first elongated tube is manufactured, based on the sheet 110 of fig. 3a, the sheet 110 is folded at the demarcation lines d₁, d₂ so that the first and second end parts 117, 118 are folded towards the first part 116, and the sheet is also bent along the longitudinal center line X₀-X₀ into tube-shape so that the folds meet at the demarcation lines d₁, d₂. The hereby created tube-shape where the demarcation lines meet is shown in fig. 3b, in which the line where the demarcation lines meet is marked with 130, the tube extending along the center axis X-X. After the folding and bending into a tube-shaped form such as in fig. 3b, the tube is welded at the fold, more specifically, at the line 130 where the demarcation lines meet, so as to create a first longitudinal tube 10 with a seamless circumference, such as in fig. 1 and fig. 2.

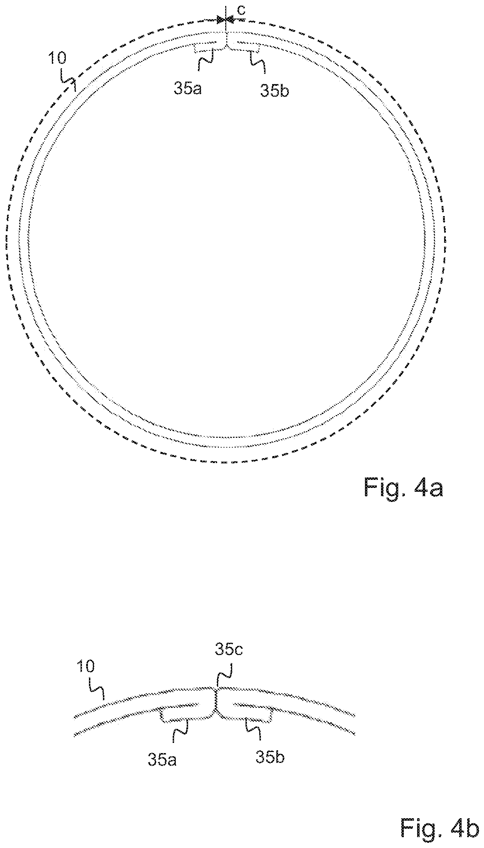

Different alternative ways of folding the end parts of the sheet 110 of fig. 3a to create different kinds of rotation-preventing protrusions on the produced first elongated tube 10 are shown in figs. 4-6.

Figs. 4a and 4b show in cross-section a first embodiment of a first elongated tube 10 produced in one piece from the flat sheet of fig. 3a. The elongate rotation-preventing protrusion 15 is in this embodiment made up from a first portion 35a and a second portion 35b, the first portion 35a being the first end part 117 of the flat sheet 110 of fig. 3a and the second portion 35b being the second end part 118. To create the protrusion 15 with its first and second portions 35a, 35b, the first end part 117 and the second end part 118 of the metal sheet have been folded so that they bear against the first part 116. The first and the second end parts 117, 118 / portions 35a, 35b have then been bonded together at a first area 35c at their respective fold.

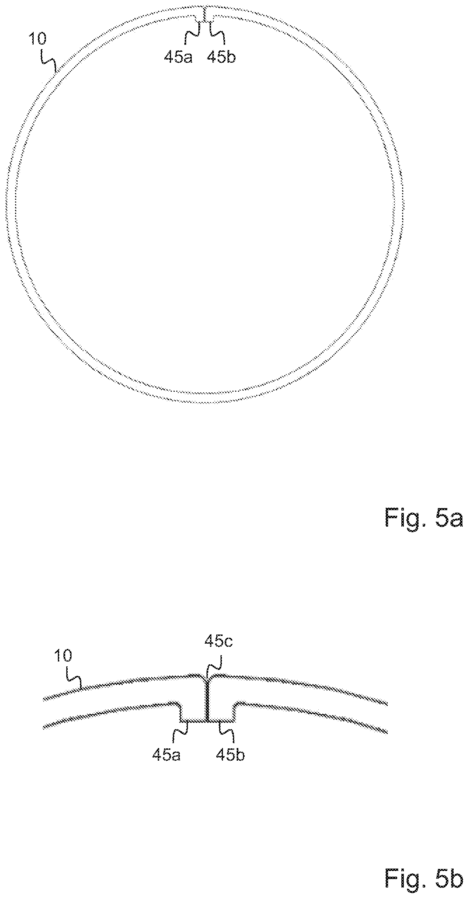

Figs. 5a and 5b show a second embodiment of a first elongated tube 10 produced in one piece from the flat sheet of fig. 3a. The elongate rotation-preventing protrusion 15 is in the second embodiment also made up from a first portion 45a and a second portion 45b, the first portion 45a being the first end part 117 of the flat sheet 110 of fig. 3a and the second portion 45b being the second end part 118. However, the portions 45a, 45b of the second embodiment are shorter than the portions 35a, 35b of the first embodiment. In other words, the flat metal sheet for the second embodiment would have the demarcation lines d₁, d₂ closer to the ends 111, 112 than in the first embodiment. Further, the end parts 117, 118 of the flat sheet 110 have been folded approximately 90 degrees in relation to the first part 116 wherein the end parts 117, 118 were folded 180 degrees in the first embodiment. In other words, the end parts 117, 118 are not folded so that they bear against the first part 116 but are instead directed towards the center axis X-X of the first tube 10. The first and the second portions 45a, 45b have been bonded together at a first area 35c at their respective fold.

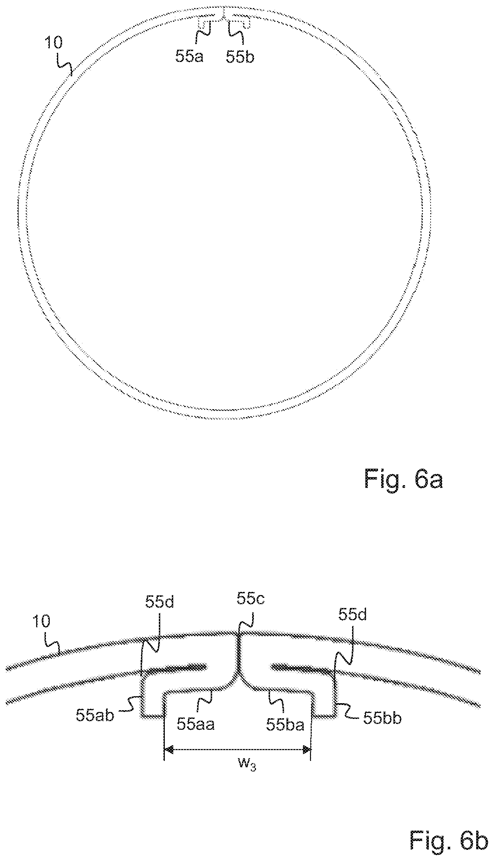

Figs. 6a and 6b show a third embodiment of a first elongated tube 10 produced in one piece from the flat sheet of fig. 3a. The elongate rotation-preventing protrusion is in the third embodiment also made up from a first portion 55a and a second portion 55b of the first tube 10, the first portion 55a being the first end part 117 of the flat sheet 110 of fig. 3a and the second portion 55b being the second end part 118. However, in this case there are two folds for each portion, a first fold 55c and a second fold 55d. At the first fold 55c, the respective end part 117, 118 was folded 180 degrees at the demarcation lines d₁, d₂ so that the folded first and second portion 55a, 55b, respectively, has a first sub-portion 55aa, 55ba bearing against the inner side of the first tube. At the second fold, which is marked on the flat sheet 110 between the first demarcation line d1 and the first end 111, parallel to the first demarcation line and the first end, and between the second demarcation line d2 and the second end 112, parallel to the second demarcation line and the second end respectively, the respective folded portion 55a, 55b was folded approximately 90 degrees in the opposite direction of the first fold so that the respective portion 55a, 55b has a second sub-portion 55ab, 55 bb directed towards the center axis X-X. Hereby, an area is created between the respective second sub-portions 55ab, 55bb for receiving a single second rotation-preventing protrusion of the second elongate tube 20. In other words, by such an arrangement with an area delimited by the second sub-portions 55ab, 55bb of the respective first and second portion 55a, 55b, only one single second rotation-preventing protrusion 25 of the second tube 20 is needed compared to the pair of second protrusions 25a, 25b shown in the embodiment of fig. 2. A distance w₃ between the inner sides of the second sub-portions 55ab, 55bb should be in correspondence to a width of such a single second rotation-preventing protrusion. The first and the second portions 55a, 55b have been bonded together at their respective first fold 55c.

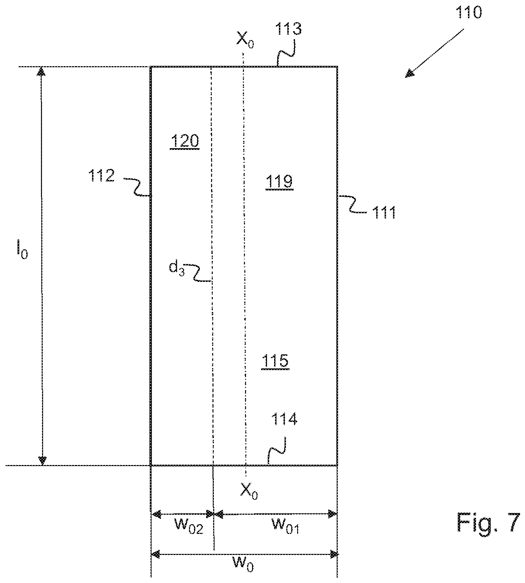

Fig. 7 shows an example not according to the invention of markings on a flat material sheet 110 for manufacturing a first elongated tube 10, where some reference numbers are the same as in the embodiment of fig. 3a. On the flat sheet 110 there is in this example only one demarcation line d₃, extending in parallel with the longitudinal center line X₀-X₀ from the third end 113 to the fourth end 114. The first demarcation line d₁ delimits a first longitudinal part 119, extending from the first end 111, from a second longitudinal part 120. The first longitudinal part 119 has a width w₀₁ perpendicular to the longitudinal center line X₀-X₀, which is approximately the same as a cross-sectional circumference c of the manufactured first elongated tube 10. The second longitudinal part 120 has a width w₀₂ perpendicular to the longitudinal center line X₀-X₀, which is approximately the same as a width w₁ (see fig. 3b) of the rotation-preventing protrusion 15 of the manufactured first elongated tube 10.

When the first elongated tube is manufactured, based on the sheet 110 of fig. 7, the sheet 110 is folded at the demarcation line d₃ so that the second longitudinal part 120 is folded towards the first longitudinal part 119, and the sheet is also bent along the longitudinal center line X₀-X₀ into tube-shape so that the fold at demarcation line d3 meets the first end 111. After the folding and bending into a tube-shaped, the tube is welded where the fold at demarcation line d3 meets the first end 111, so as to create a first longitudinal tube with a seamless circumference.

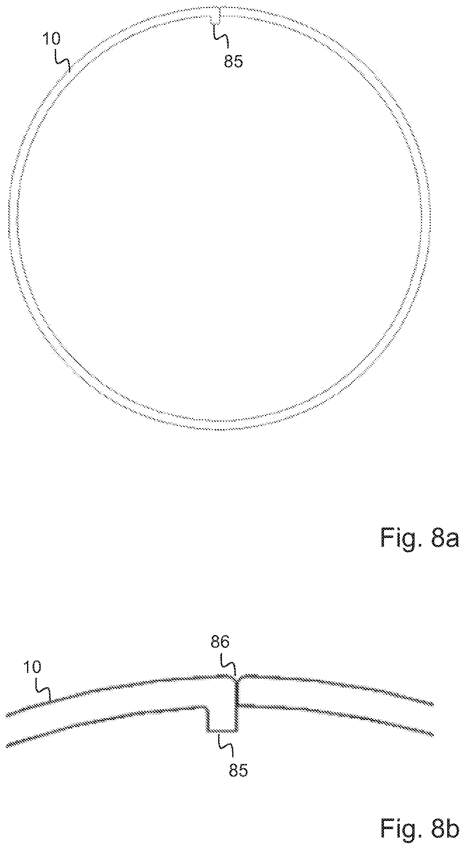

Different alternative ways of folding the end parts of the sheet 110 of fig. 7 to create different kinds of rotation-preventing protrusions on the produced first elongated tube 10 are shown in figs. 8-9.

Figs. 8a and 8b show an example of a first elongated tube 10 produced in one piece from the flat sheet of fig. 7. The elongate rotation-preventing protrusion is realized as one portion 85, opposed to the two portions of the first, second and third embodiment manufactured from the flat sheet 110 of fig. 3a. The sheet 110 is folded approximately 90 degrees at the third demarcation line d₃ so that the second longitudinal part 120, i.e. the one portion 85, is directed towards the center axis X-X of the first tube. Thereafter, a bond is created, e.g. by welding, at an area 86 where the portion 85 meets the first end 111 of the flat sheet 110 to create a first longitudinal tube 10 with a seamless circumference.

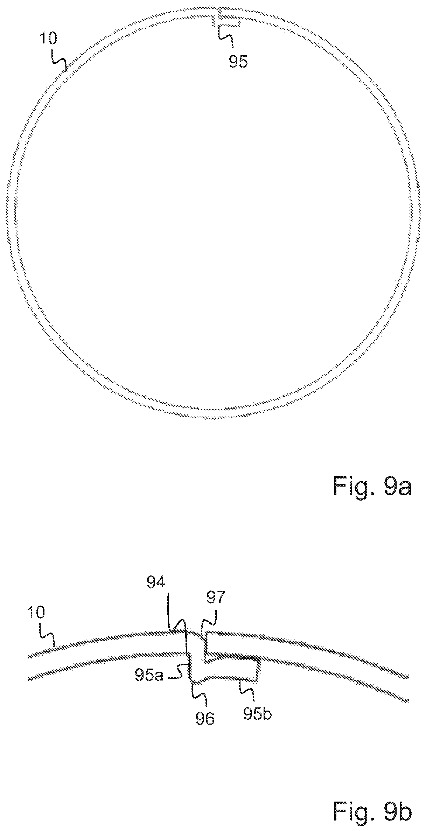

Figs. 9a and 9b show another example of a first elongated tube 10 produced in one piece from the flat sheet of fig. 7. In this example, the second longitudinal part 120 of the flat sheet pf fig. 7 would actually be a little bit larger than the second longitudinal part of the example of figs. 8a and 8b. The elongate rotation-preventing protrusion 15 is realized as one portion 95. In this example there are two folds at the one portion 95: a first fold 94 and a second fold 96. At the first fold 94, the second part 120 was folded 90 degrees at the demarcation line d₃ so that the folded portion 95 has a first sub-portion 95a extending in a direction towards the center axis of the tube. At the second fold 96, which could be marked on the flat sheet 110 between the demarcation line d3 and the second end 112, parallel to the demarcation line and the second end, the folded portion 95 was folded approximately 90 degrees in the opposite direction of the first fold so that the portion 95 has a second sub-portion 95b extending substantially in parallel with the circumference/inner surface of the first tube 10 and bearing against the inner side of the first tube. The first sub-portion 95a has thereafter been bonded with the first edge 111 of the flat sheet, i.e. with an edge 96 of fig. 9a, 9b to create a first longitudinal tube 10 with a seamless circumference. Thereafter, a bond is created, e.g. by welding, at an area 97 where the first sub-portion 95a meets the first end 111 of the flat sheet 110 to create a first longitudinal tube 10 with a seamless circumference. Consequently, for the example of fig. 9 as well as for the embodiment of fig. 4 and fig. 6, the elongated protrusion 15 bears against the inner side of the first elongated tube 10. In other words, the elongated protrusion was in the elongated tubes of fig. 4, fig. 6 and fig. 9 created by folding end part(s) of the flat material sheet so as to bear against a side of the flat material sheet that will constitute the inner side of the first elongated tube.

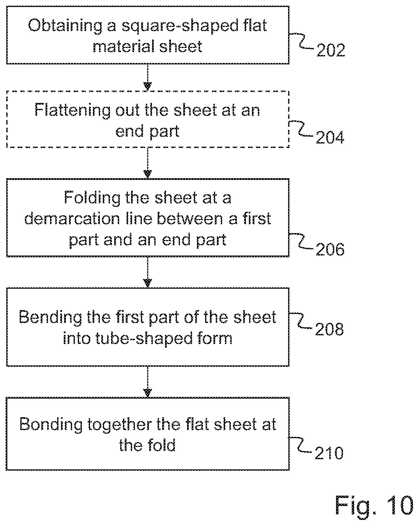

Fig. 10 describes a method for manufacturing a first elongated tube 10 of a telescopic column, the first tube 10 having a first elongate protrusion 15, arranged on its inner side, for co-operation with one or more second protrusions arranged on an outer side of a second tube of the telescopic column so as to prevent rotation between the first and the second tube, the second tube having a smaller cross-sectional dimension than the first tube. The manufacturing method comprises obtaining 202 a square-shaped flat material, e.g. metal, sheet having a length l₀ along a longitudinal axis X₀-X₀ corresponding to the length l₁ of the manufactured first elongated tube 10, and a width w₀ perpendicular to the longitudinal axis X₀-X₀ from a first edge 111 to an opposite second edge 112 that is greater than the circumference c of the manufactured first elongated tube. The obtaining 202 may be performed by producing the square-shaped plate metal sheet with the defined dimensions out of a larger sheet at the manufacturing site, or by ordering already prepared flat metal sheet with the defined dimensions from another provider.

The manufacturing method further comprises folding 206 the flat material sheet 110, at a longitudinal demarcation line arranged between a first part and an end part. The first part has a width corresponding to the circumference of the manufactured first elongated tube. The end part has a width corresponding to a width of the first elongate protrusion of the manufactured first elongated tube. The end part is folded towards a first side of the flat material sheet that is to become the inner side of the first elongated tube 10. The method further comprises bending 208 the first part of the flat material sheet around the longitudinal axis into a tube-shaped form such that the first edge 111 of the flat sheet meets the fold between the first part and the end part (example of fig. 7) or such that a fold between the first part and a first end part meets a fold between the first part and a second end part (embodiment of fig. 3a), and such that the end part forms the first elongate protrusion 15 on the inner side of the first tube 10. Thereafter, a joint is bonded together 210 at the fold of the tube-shaped form such that the cross-section of the first elongated tube 10 becomes seamless. The bonding together may be performed by welding. The welding is preferably performed from the outside of the tube. The folding and bending may be performed in a roll-forming procedure. Roll forming is a method wherein a flat metal sheet is formed into a requested form using rolls. I.e. the flat metal sheet is fed into a roll forming apparatus with e.g. a transversal edge first, and then slowly fed through the roll forming apparatus taking the required shape. The bonding is preferably performed after the roll forming process.

According to an embodiment, the flat sheet may be flattened out 204 at its end part so that the end part resembles a thinner flat dimension that the rest of the flat sheet. The flattening out may be performed before the roll-forming process but it may also be performed during or after the roll-forming process. The end parts, and consequently the first rotation-protection protrusions will then have a thickness that is lower than the thickness of the first tube. According to an embodiment, material may be pushed into the joint at the fold so as to receive material for the welding. Such material may be taken from the end part, especially if the end part is flattened out. Then no additional material has to be added at the welding.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein by reference and are intended to be encompassed hereby. Moreover, it is not necessary for an apparatus or method to address each and every problem sought to be solved by the presently described concept, for it to be encompassed hereby. In the exemplary figures, a broken line generally signifies that the feature within the broken line is optional.

## Claims

1. Method for manufacturing a first elongated tube (10) of a telescopic column (1) for a height-adjustable furniture, wherein the first elongated tube is to have a length (l₁) along a longitudinal center axis (X-X), to have a circular cross-section perpendicular to the center axis with a circumference (c), to co-operate with a second elongated tube (20) of a smaller circular cross-section than the first elongated tube, and to have a first elongate protrusion (15) arranged on an inner side of the first elongated tube, the protrusion (15) extending along the center axis (X-X) for co-operation with one or more second protrusions arranged on an outer side of the second elongated tube so as to prevent rotation between the first elongated tube and the second elongated tube when the first elongated tube and the second elongated tube are mounted together in a telescopic column, the method comprising:
obtaining a square-shaped flat material sheet (110) having a length (l₀) along a longitudinal axis (X₀-X₀) corresponding to the length (l₁) of the manufactured first elongated tube (10), and a width (w₀) perpendicular to the longitudinal axis (X₀-X₀) from a first edge (111) to an opposite second edge (112) that is greater than the circumference (c) of the manufactured first elongated tube,
folding the flat material sheet (110), at a longitudinal demarcation line (d; d₁, d₂) arranged between a first part (116; 119) having a length corresponding to the length (l₀) of the flat material sheet and a width (w₀₁) corresponding to the circumference (c) of the manufactured first elongated tube, and an end part (117, 118; 120) having a length corresponding to the length (I) of the flat material sheet and a width (w₀₂) corresponding to a width of the first elongate protrusion (15) of the manufactured first elongated tube, so that the end part (117, 118; 120) is folded towards a first side (115) of the flat material sheet that is to become the inner side of the first elongated tube (10), such that a fold is created,
bending the first part (116; 119) of the flat material sheet along the longitudinal axis (X₀-X₀) into a tube-shaped form such that the first side (115) becomes the inner side of the first elongated tube, and such that the end part (117, 118; 120) forms the first elongate protrusion (15), and
bonding a joint at the fold of the tube-shaped form together such that the cross-section of the first elongated tube (10) is seamless,
wherein the flat material sheet (110) is folded at the demarcation line (d; d₁, d₂) such that a first side (115) of the end part (117, 118; 120) bears against a first side (115) of the first part (116; 119), wherein the end part comprises two end parts (117, 118) mutually separated by the first part (116), and the demarcation line (d) comprises a first demarcation line (d₁) arranged between a first (117) of the two end parts and the first part (116), and a second demarcation line (d₂) arranged between a second (118) of the two end parts and the first part (116), and wherein the folding comprises folding the flat material sheet (110) at the first demarcation line (d₁) creating a first fold and folding the flat material sheet at the second demarcation line (d₂) creating a second fold, and wherein the bending is performed such that the first fold and the second fold meet at their demarcation lines (d₁, d₂), and wherein the bonding of a joint is performed where the first and the second fold meet, and wherein the first and the second end parts (117, 118) are folded so that they bear against the first part (116).

2. Method according to claim 1, wherein the folding and bending are performed in a roll-forming procedure.

3. Method according to claim 1 or 2, further comprising, flattening out the flat material sheet at the end part (117, 118; 120).

4. A first elongated tube (10) of circular cross-section to be used in a telescopic column (1) of a height adjustable furniture for co-operation with a second elongated tube (20) of circular cross-section, the first elongated tube extending along a longitudinal center axis (X-X) and having a larger cross-sectional dimension than the second elongated tube, the first elongated tube comprising:
a first elongated protrusion (15) arranged on an inner side of the first elongated tube (10) and extending along the center axis (X-X), for co-operation with one or more second protrusions arranged on an outer side of the second elongated tube (20) so as to prevent rotation between the first elongated tube and the second elongated tube when the first elongated tube and the second elongated tube are mounted together in a telescopic column (1), **characterized in that** the first elongated tube (10) including the first elongated protrusion (15) is produced in one piece according to the method described in any of claims 1-3.

5. First elongated tube (10) according to claim 4, wherein the first elongated protrusion (15) constitutes a longitudinal end part of a material sheet (110) from which the first elongated tube is produced.

6. First elongated tube (10) according to claim 5, wherein the first elongated protrusion (15) is built up from opposite longitudinal end parts (117, 118) of the material sheet (110), wherein the opposite longitudinal end parts have been folded so that they bear against a first part (116) of the material sheet and thereafter the opposite end parts have been bonded together.

7. First elongated tube (10) according to any of claims 4-6, wherein the first elongated protrusion (15) bears against the inner side of the first elongated tube (10).

8. A telescopic column (1) to be used in a height-adjustable furniture, the telescopic column extending along a center axis (X-X), the telescopic column comprising:
a first elongated tube (10) of a circular cross-section, and
a second elongated tube (20) of a circular cross-section, the second elongated tube having a smaller cross-sectional dimension than the first elongated tube and the second elongated tube being substantially concentric with the first elongated tube, wherein the second elongated tube is arranged to move into and out of the first elongated tube so as to adjust the length of the telescopic column, and
a rotation prevention arrangement (15, 25) for preventing rotation between the first elongated tube and the second elongated tube, comprising
a first elongate protrusion (15) arranged on an inner side of the first elongated tube (10) and extending along the center axis (X-X), and
one or more second protrusions (25) arranged on an outer side of the second elongated tube (20) and extending along the center axis (X-X), wherein the first elongate protrusion (15) and the one or more second protrusions (25) are arranged to co-operate when the second elongated tube (20) is moved into and out of the first elongated tube (10) so as to prevent rotation between the first elongated tube and the second elongated tube, **characterized in that** the first elongated tube (10) including the first elongated protrusion (15) is produced in one piece according to the method described in any of claims 1-3.

## Patentansprüche

1. Verfahren zum Herstellen eines ersten länglichen Rohrs (10) einer Teleskopsäule (1) für ein höhenverstellbares Möbelstück, wobei das erste längliche Rohr eine Länge (l₁) entlang einer Längsmittelachse (X-X) aufweisen, einen kreisförmigen Querschnitt im rechten Winkel zu der Mittelachse mit einem Umfang (c) aufweisen, mit einem zweiten länglichen Rohr (20) eines kleineren kreisförmigen Querschnitts als das erste länglich Rohr zusammenwirken und einen an einer Innenseite des ersten länglichen Rohrs angeordneten ersten länglichen Vorsprung (15) aufweisen soll, wobei sich der Vorsprung (15) entlang der Mittelachse (X-X) zum Zusammenwirken mit einem oder mehreren an einer Außenseite des zweiten länglichen Rohrs angeordneten zweiten Vorsprüngen erstreckt, um eine Rotation zwischen dem ersten länglichen Rohr und dem zweiten länglichen Rohr zu verhindern, wenn das erste längliche Rohr und das zweite längliche Rohr in einer Teleskopsäule aneinander montiert sind, wobei das Verfahren umfasst:
Beschaffen einer quadratförmigen flachen Werkstoffbahn (110) mit einer Länge (l₀) entlang einer Längsachse (X₀-X₀), die der Länge (l₁) des hergestellten ersten länglichen Rohrs (10) entspricht, und einer Breite (w₀) im rechten Winkel zu der Längsachse (X₀-X₀) von einer ersten Kante (111) zu einer gegenüberliegenden zweiten Kante (112), die größer als der Umfang (c) des hergestellten ersten länglichen Rohrs ist,
Falzen der flachen Werkstoffbahn (110) an einer längsverlaufenden Trennlinie (d; d₁, d₂), die zwischen einem ersten Teil (116; 119) mit einer Länge, die der Länge (l₀) der flachen Werkstoffbahn entspricht, und
einer Breite (w₀₁), die dem Umfang (c) des hergestellten ersten länglichen Rohrs entspricht, und einem Endteil (117, 118; 120) mit einer Länge, die der Länge (l) der flachen Werkstoffbahn entspricht, und einer Breite (w₀₂),
die einer Breite des ersten länglichen Vorsprungs (15) des hergestellten länglichen Rohrs entspricht, angeordnet ist, derart, dass das Endteil (117, 118; 120) hin zu einer ersten Seite (115) der flachen Werkstoffbahn gefalzt wird, die die Innenseite des ersten länglichen Rohrs (10) werden soll, sodass ein Falz erzeugt wird,
Biegen des ersten Teils (116; 119) der flachen Werkstoffbahn entlang der Längsachse (X₀-X₀) in eine rohrförmige Form derart, dass die erste Seite (115) die Innenseite des ersten länglichen Rohrs wird, und dass das Endteil (117, 118; 120) den ersten länglichen Vorsprung (15) bildet, und
Verbinden einer Fügestelle an dem Falz der rohrförmigen Form miteinander derart, dass der Querschnitt des ersten länglichen Rohrs (10) nahtlos ist,
wobei die flachen Werkstoffbahn (110) an der Trennlinie (d; d₁, d₂) derart gefalzt wird, dass eine erste Seite (115) des Endteils (117, 118; 120) gegen eine erste Seite (115) des ersten Teils (116; 119) drückt, wobei der Endteil zwei Endteile (117, 118) umfasst, die durch den ersten Teil (116) voneinander getrennt sind, und die Trennlinie (d) eine erste Trennlinie (d₁), die zwischen einem ersten (117) der zwei Endteile und dem ersten Teil (116) angeordnet ist, und eine zweite Trennlinie (d₂), die zwischen einem zweiten (118) der zwei Endteile und dem ersten Teil (116) angeordnet ist, umfasst, und wobei das Falzen Falzen der flachen Werkstoffbahn (110) an der ersten Trennlinie (d₁), sodass ein erster Falz entsteht, und Falzen der flachen Werkstoffbahn an der zweiten Trennlinie (d₂), sodass ein zweiter Falz entsteht, umfasst, und wobei das Biegen derart durchgeführt wird, dass sich der ersten Falz und der zweite Falz an ihren Trennlinien (d₁, d₂) treffen, und wobei das Verbinden einer Fügestelle durchgeführt wird, wo sich der erste und der zweite Falz treffen, und wobei die ersten und die zweiten Endteile (117, 118) derart gefalzt werden, dass sie gegen den ersten Teil (116) drücken.

2. Verfahren nach Anspruch 1, wobei das Falzen und Biegen in einem Rollformprozess durchgeführt werden.

3. Verfahren nach Anspruch 1 oder 2, ferner umfassend Abplatten der flachen Werkstoffbahn an dem Endteil (117, 118; 120).

4. Erstes längliches Rohr (10) eines kreisförmigen Querschnitts, das in einer Teleskopsäule (1) eines höhenverstellbaren Möbelstücks zum Zusammenwirken mit einem zweiten länglichen Rohr (20) eines kreisförmigen Querschnitts verwendbar ist, wobei sich das erste längliche Rohr entlang einer Längsmittelachse (X-X) erstreckt und eine größere Querschnittsabmessung als das zweite längliche Rohr aufweist, wobei das erste längliche Rohr umfasst:
einen ersten länglichen Vorsprung (15), der an einer Innenseite des ersten länglichen Rohrs (10) angeordnet ist und sich entlang der Mittelachse (X-X) erstreckt, zum Zusammenwirken mit einem oder mehreren an einer Außenseite des zweiten länglichen Rohrs (20) angeordneten zweiten Vorsprüngen, um eine Rotation zwischen dem ersten länglichen Rohr und dem zweiten länglichen Rohr zu verhindern, wenn das erste längliche Rohr und das zweite längliche Rohr in einer Teleskopsäule (1) aneinander montiert sind, **dadurch gekennzeichnet, dass** das erste längliche Rohr (10) mit dem ersten länglichen Vorsprung (15) in einem Stück gemäß dem in einem der Ansprüche 1-3 beschriebenen Verfahren gefertigt ist.

5. Erstes längliches Rohr (10) nach Anspruch 4, wobei der erste längliche Vorsprung (15) einen längsverlaufenden Endteil einer Werkstoffbahn (110) darstellt, aus der das erste längliche Rohr gefertigt ist.

6. Erstes längliches Rohr (10) nach Anspruch 5, wobei der erste längliche Vorsprung (15) aus gegenüberliegenden längsverlaufenden Endteilen (117, 118) der Werkstoffbahn (110) aufgebaut ist, wobei die gegenüberliegenden längsverlaufenden Endteile derart gefalzt wurden, dass sie gegen einen ersten Teil (116) der Werkstoffbahn drücken, und anschließend die entgegengesetzten Endteile miteinander verbunden wurden.

7. Erstes längliches Rohr (10) nach einem der Ansprüche 4-6, wobei der erste längliche Vorsprung (15) gegen die Innenseite des ersten länglichen Rohrs (10) drückt.

8. Teleskopsäule (1), die in einem höhenverstellbaren Möbelstück verwendbar ist, wobei sich die Teleskopsäule entlang einer Mittelachse (X-X) erstreckt, wobei die Teleskopsäule umfasst:
ein erstes längliches Rohr (10) eines kreisförmigen Querschnitts, und
ein zweites längliches Rohr (20) eines kreisförmigen Querschnitts, wobei das zweite längliche Rohr eine kleinere Querschnittsabmessung als das erste längliche Rohr aufweist und das zweite längliche Rohr im Wesentlichen konzentrisch mit dem ersten länglichen Rohr ist, wobei das zweite längliche Rohr angeordnet ist, sich in und aus dem ersten länglichen Rohr zu bewegen, um die Länge der Teleskopsäule einzustellen, und
eine Rotationsverhinderungsanordnung (15, 25) zum Verhindern einer Rotation zwischen dem ersten länglichen Rohr und dem zweiten länglichen Rohr, umfassend einen ersten länglichen Vorsprung (15), der an einer Innenseite des ersten länglichen Rohrs (10) angeordnet ist und sich entlang der Mittelachse (X-X) erstreckt, und
einen oder mehrere zweite Vorsprünge (25), die an einer Außenseite des zweiten länglichen Rohrs (20) angeordnet sind und sich entlang der Mittelachse (X-X) erstrecken, wobei der erste längliche Vorsprung (15) und der eine oder die mehreren zweiten Vorsprünge (25) angeordnet sind, zusammenzuwirken, wenn das zweite längliche Rohr (20) in und aus dem ersten länglichen Rohr (10) bewegt wird, um eine Rotation zwischen dem ersten länglichen Rohr und dem zweiten länglichen Rohr zu verhindern, **dadurch gekennzeichnet, dass** das erste längliche Rohr (10) mit dem ersten länglichen Vorsprung (15) in einem Stück gemäß dem in einem der Ansprüche 1-3 beschriebenen Verfahren gefertigt ist.

## Revendications

1. Procédé de fabrication d'un premier tube allongé (10) d'une colonne télescopique (1) pour un meuble réglable en hauteur, dans lequel le premier tube allongé doit présenter une longueur (l₁) le long d'un axe central longitudinal (X-X), présenter une section transversale circulaire perpendiculaire à l'axe central d'une circonférence (c), pour coopérer avec un second tube allongé (20) d'une section circulaire inférieure à celle du premier tube allongé, et comporter une première saillie allongée (15) disposée sur un côté intérieur du premier tube allongé, la saillie (15) s'étendant le long de l'axe central (X-X) pour la coopération avec une ou plusieurs secondes saillies disposées sur un côté extérieur du second tube allongé de façon à empêcher la rotation entre le premier tube allongé et le second tube allongé lorsque le premier tube allongé et le second tube allongé sont montés ensemble dans une colonne télescopique, le procédé comprenant :
l'obtention d'une feuille de matériau plate de forme carrée (110) présentant une longueur (l₀) le long d'un axe longitudinal (X₀-X₀) correspondant à la longueur (l₁) du premier tube allongé fabriqué (10), et une largeur (w₀) perpendiculaire à l'axe longitudinal (X₀-X₀) entre un premier bord (111) et un second bord opposé (112) qui est supérieure à la circonférence (c) du premier tube allongé fabriqué,
le pliage de la feuille de matériau plate (110), à une ligne de démarcation longitudinale (d ; d₁, d₂) disposée entre une première partie (116 ; 119) présentant une longueur correspondant à la longueur (l₀) de la feuille de matériau plate et une largeur (w₀₁) correspondant à la circonférence (c) du premier tube allongé, et une partie d'extrémité (117, 118 ; 120) présentant une longueur correspondant à la longueur (l) de la feuille de matériau plate et une largeur (w₀₂) correspondant à une largeur de la première saillie allongée (15) du premier tube allongé fabriqué, de sorte que la partie d'extrémité (117, 118 ; 120) soit pliée en direction d'un premier côté (115) de la feuille de matériau plate qui doit devenir le côté intérieur du premier tube allongé (10), de façon à créer une pliure,
la flexion de la première partie (116 ; 119) de la feuille de matériau plate allongée le long de l'axe longitudinal (X₀-X₀) en une forme de tube de sorte que le premier côté (115) devienne le côté intérieur du premier tube allongé, et de sorte que la partie d'extrémité (117, 118 ; 120) forme la première saillie allongée (15), et
la liaison d'une jonction à la pliure de la forme de tube de sorte que la section transversale du premier tube allongé (10) soit continue,
dans lequel la feuille de matériau plate (110) est pliée à la ligne de démarcation (d ; d₁, d₂) de sorte qu'un premier côté (115) de la partie d'extrémité (117, 118 ; 120) repose contre un premier côté (115) de la première partie (116 ; 119), dans lequel la partie d'extrémité comprend deux parties d'extrémité (117, 118) mutuellement séparées par la première partie (116), et la ligne de démarcation (d) comprend une première ligne de démarcation (d₁) disposée entre une première (117) des deux parties d'extrémité et la première partie (116), et une seconde ligne de démarcation (d₂) disposée entre une seconde (118) des deux parties d'extrémité et la première partie (116), et dans lequel le pliage comprend le pliage de la feuille de matériau plate (110) à la première ligne de démarcation (d₁) créant une première pliure et le pliage de la feuille de matériau plate à la seconde ligne de démarcation (d₂) créant une seconde pliure, et dans lequel la flexion est exécutée de sorte que la première pliure et la seconde pliure se rejoignent à leurs lignes de démarcation (d₁, d₂), et dans lequel la liaison d'une jonction est exécutée à l'endroit où se rejoignent la première et la seconde pliure, et dans lequel les première et seconde parties d'extrémité (117, 118) sont pliées de façon à reposer contre la première partie (116).

2. Procédé selon la revendication 1, dans lequel le pliage et la flexion sont exécutés lors d'une procédure de profilage.

3. Procédé selon la revendication 1 ou 2, comprenant en outre l'aplatissement de la feuille de matériau plate à la partie d'extrémité (117, 118 ; 120).

4. Premier tube allongé (10) de section transversale circulaire à utiliser dans une colonne télescopique (1) d'un meuble réglable en hauteur pour une coopération avec un second tube allongé (20) de section transversale circulaire, le premier tube allongé s'étendant le long d'un axe central longitudinal (X-X) et présentant une dimension en coupe transversale supérieure à celle du second tube allongé, le premier tube allongé comprenant :
une première saillie allongée (15) disposée sur un côté intérieur du prmeier tube allongé (10) et s'étendant le long de l'axe central (X-X) pour la coopération avec une ou plusieurs secondes saillies disposées sur un côté extérieur du second tube allongé (20) de façon à empêcher la rotation entre le premier tube allongé et le second tube allongé lorsque le premier tube allongé et le second tube allongé sont montés ensemble dans une colonne télescopique (1), **caractérisé en ce que** le premier tube allongé (10) incluant la première saillie allongée (15) est produit en une seule pièce conformément au procédé selon l'une quelconque des revendications 1 à 3.

5. Premier tube allongé (10) selon la revendication 4, dans lequel la première saillie allongée (15) constitue une partie d'extrémité longitudinale d'une feuille de matériau (110) à partir de laquelle le premier tube allongé est produit.

6. Premier tube allongé (10) selon la revendication 5, dans lequel la première saillie allongée (15) est construite à partir de parties d'extrémité longitudinales opposées (117, 118) de la feuille de matériau (110), dans lequel les parties d'extrémité allongées opposées ont été pliées de façon à reposer contre une première partie (116) de la feuille de matériau, puis les parties d'extrémité opposées ont été liées ensemble.

7. Premier tube allongé (10) selon l'une quelconque des revendications 4 à 6, dans lequel la première saillie allongée (15) repose contre le côté intérieur du premier tube allongé (10).

8. Colonne télescopique (1) à utiliser dans un meuble réglable en hauteur, la colonne télescopique s'étendant le long d'un axe central (X-X), la colonne télescopique comprenant :
un premier tube allongé (10) de section transversale circulaire, et
un second tube allongé (20) de section transversale circulaire, le second tube allongé présentant une dimension en coupe transversale inférieure à celle du premier tube allongé et le second tube allongé étant sensiblement concentrique au premier tube allongé, dans laquelle le second tube allongé est agencé pour entrer dans et sortir du premier tube allongé de façon à régler la longueur de la colonne télescopique, et
un agencement d'empêchement de rotation (15, 25) destiné à empêcher la rotation entre le premier tube allongé et le second tube allongé, comprenant
une première saillie allongée (15) disposée sur un côté intérieur du premier tube allongé (10) et s'étendant le long de l'axe central (X-X), et
une ou plusieurs secondes saillies (25) disposées sur un côté extérieur du second tube allongé (20) et s'étendant le long de l'axe central (X-X), dans laquelle la première saillie allongée (15) et la ou les secondes saillies (25) sont disposées pour coopérer lorsque le second tube allongé (20) est déplacé pour entrer dans et sortir du premier tube allongé (10) de façon à empêcher la rotation entre le premier tube allongé et le second tube allongé, **caractérisée en ce que** le premier tube allongé (10) incluant la première saillie allongée (15) est produit en une seule pièce conformément au procédé selon l'une quelconque des revendications 1 à 3.
